# EUROPÄISCHE PATENTSCHRIFT

(11) **EP 0 838 623 B1**
(45) Veröffentlichungstag und Bekanntmachung des Hinweises auf die Patenterteilung: **11.10.2000**
(21) Anmeldenummer: 97114323.5
(22) Anmeldetag: 20.08.1997
(51) Int. Cl.: F16L 5/08

(54) **Pressringverschluss**
Pressring closure
Fermeture à bague de pression

(30) Priorität: 24.10.1996 DE 29618521 U
(43) Veröffentlichungstag der Anmeldung: 29.04.1998
(73) Patentinhaber: Hermann-Heinz Burger Gas- und Wasserarmaturen GmbH, 59423 Unna (DE)
(72) Erfinder: Burger, Hermann-Heinz, Ch-8849 Alpthal (CH)
(74) Vertreter: Dörner, Lothar, Dipl.-Ing.

(56) Entgegenhaltungen:
- DE-U- 8 318 672
- DE-U- 8 809 629
- DE-U- 9 100 216
- GB-A- 2 221 736

## Beschreibung

Die Erfindung betrifft einen Preßringverschluß für eine Mauerdurchführung mit einem Ring aus gummielastischem Material, an dem an seiner Außenseite Wülste vorgesehen sind und bei dem an jeder Stirnfläche ein Bohrungen aufweisender Flansch anliegt, wobei beide Flansche mittels axial verlaufender, symmetrisch versetzt angeordneter und durch die Bohrungen gesteckter Schraubenbolzen gegeneinander gedrückt sind.

Preßringverschlüsse der vorgenannten Art sind bekannt (vgl. DE-GM 83 18 672). Sie werden in Mauerdurchführungen zwischen einem Installationsrohr und dem Mauerwerk oder einem Mauerschutzrohr angebracht, um zu verhindern, daß Grund- oder Sickerwasser über die Mauerdurchführung in ein Gebäude eindringt. Bei den bekannten Preßringverschlüssen bildet sich beim Pressen der beiden Flansche gegeneinander sowohl an der der Mauer/dem Mauerschutzrohr zugewandten Seite als auch an der dem Installationsrohr zugewandten Seite eine balgartige Form aus, die sich an die Rohre anschmiegt und somit die Dichtung zwischen Mauer/Mauerschutzrohr und Installationsrohr herstellt. Diese nur einfache Abdichtung beinhaltet den Nachteil, daß bei Verunreinigungen, die sich zwischen dem Ring aus gummielastischem Material und der Mauer/dem Mauerschutzrohr bzw. dem Installationsrohr befinden, oder bei verkantetem Einbau des Preßringverschlusses keine optimale Dichtung erfolgen kann.

Es ist weiterhin eine Dichtung für Kabeldurchführungen durch Wände bekannt (vgl. DE-GM 88 09 629). Die Dichtung weist einen hohlen Dichtkörper aus elastischem Material auf, der durch axiales Zusammenpressen sich radial aufweitet und sich damit dichtend an die Innenwand eines den Dichtkörper umschließenden Rahmens und an in der Durchgangsöffnung des Dichtkörpers befindliche Kabelstücke anlegt. An jeder Stirnfläche des Rings liegen voneinander getrennte Druckplatten an. Jede Druckplatte weist eine Bohrung auf. Die Druckplatten an den gegenüberliegenden Stirnflächen sind mittels Schraubenbolzen gegeneinandergedrückt. Die Schraubenbolzen verlaufen axial, sind symmetrisch versetzt angeordnet und durch die Bohrungen gesteckt. Der Dichtkörper weist auf seiner Außenseite Dichtleisten in der Form von umlaufenden Wülsten auf.

Der Erfindung liegt die Aufgabe zugrunde, einen Preßringverschluß der gattungsgemäßen Art so auszubilden, daß eingeschlossene Verunreinigungen keinen negativen Einfluß auf die Dichtwirkung des Preßringverschlusses haben; insbesondere soll die Dichtfläche der Wülste an der Außenseite des Dichtrings weitervergrößert werden. Gemäß der Erfindung wird diese Aufgabe dadurch gelöst, daß am Ring auch an seiner Innenseite Wülste vorgesehen, außerdem an seiner Innenseite an beiden Enden Lippen angeformt sind, die in axialer Richtung über die Stirnflächen des Rings hinausragen.

Mit der Erfindung ist ein Preßringverschluß für eine Mauerdurchführung geschaffen, der trotz möglicher Verunreinigungen oder einem verkantetem Einbau eine optimale Dichtwirkung zwischen Mauer/Mauerschutzrohr und Installationsrohr erzielt. Die am Installationsrohr anliegenden Lippen vergrößern die Dichtfläche. Durch die Lippen ist es daher möglich, auch im Falle eines verbogenen Installationsrohrs optimale Dichtwirkung zu erzielen.

In Ausgestaltung der Erfindung weisen die Flansche Bohrungen und die Schraubenbolzen einen Schaft in Form eines Vierkants auf. In Folge der Vierkantbohrungen und der Schäfte in Form von Vierkanten ist zum einen ein Verdrehschutz beim Anziehen der Schrauben geschaffen. Zum anderen ist eine Versenkung der Schraubenbolzen bis zum Kopf möglich.

In weiterer Ausgestaltung der Erfindung ist der Ring an einer Stelle mit einem über den gesamten Querschnitt verlaufenden Spalt versehen und jeder der Flansche in zwei Teile getrennt. Durch die geteilte Ausführung ist es möglich, den Preßringverschluß auch bei Installationsrohren anzuwenden, die an ihren beiden Enden mit Erweiterungen versehen sind, deren Durchmesser ein Überschieben des einteiligen Preßringverschlusses nicht mehr gestattet.

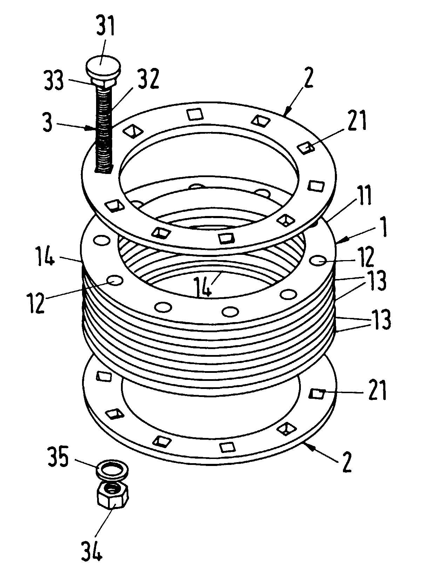

Ein Ausführungsbeispiel der Erfindung ist in der Zeichnung dargestellt und wird im folgenden näher beschrieben. Die einzige Figur der Zeichnung zeigt eine perspektivische Explosionsdarstellung eines Preßringverschlusses.

Der als Ausführungsbeispiel gewählte Preßringverschluß für eine Mauerdurchführung weist einen Ring 1 aus gummielastischem Material auf. Der Ring 1 hat im Querschnitt ein im wesentlichen rechteckiges Profil. An seinen Stirnflächen 11 ist der Ring 1 eben ausgebildet. Der Ring 1 ist von Axialbohrungen 12 durchsetzt. An seiner Außen- und seiner Innenseite weist der Ring 1 Wulste 13 auf. Die Anzahl der Wulste 13 ist abhängig von der Dicke des Rings 1. An den Ring 1 sind auf der Innenseite in axialer Richtung Lippen 14 angeformt, die über die Stirnflächen 11 des Rings 1 hinausragen. Die Höhe der Lippen 14 ist jeweils gleich der Dicke von Flanschen 2, die an den Stirnflächen 11 des Rings 1 anliegen. Der Ring 1 ist vorzugsweise aus Polyurethan hergestellt.

Die Flansche 2 bestehen aus VA-Stahl. Sie weisen Bohrungen 21 in Form eines Vierkants auf. Die Anzahl der Bohrungen 21 in den Flanschen 2 ist gleich der Anzahl der Axialbohrungen 12 des Rings 1. In zusammengebautem Zustand des Preßringverschlusses fluchten die Bohrungen 21 mit den Bohrungen 12.

Die Flansche 2 sind mittels axial verlaufender, symmetrisch versetzt angeordneter Schraubenbolzen 3 gegeneinander gedrückt. Die Schraubenbolzen 3 sind vorzugsweise aus VA-Stahl hergestellt. In zusammengebautem Zustand des Preßringverschlusses sind die Schrauben 3 mit Kupferfett oder Graphitfett versehen, um eine sog. Kaltverschweißung bei ungewolltem zu festem Anziehen zu verhindern. Bei den Schraubenbolzen 3 handelt es sich um Flachrundschrauben. Sie weisen auf einer Seite einen nietenförmigen Kopf 31 auf. Auf der dem Kopf 31 abgewandten Seite sind die Schraubenbolzen 3 mit einem Gewinde 32 versehen. Zwischen Kopf 31 und Gewinde 32 befindet sich ein Schaft 33. Der Schaft 33 hat die Form eines Vierkants. Auf dem dem Kopf 31 abgewandten Ende ist auf das Gewinde 32 eine Sechskantmutter 34 aufgeschraubt. Zwischen Sechskantmutter 34 und zugehörigem Flansch 2 ist eine Unterlegscheibe 35 vorgesehen. Im Ausführungsbeispiel sind zehn Schraubenbolzen 3 vorgesehen.

Der Preßringverschluß bildet beispielsweise die Dichtung zwischen einem in ein Mauerwerk eingelassenes Mauerschutzrohr und einem Installationsrohr. Der Preßringverschluß wird von einer Seite über das Installationsrohr geschoben und im Bereich des Mauerwerks in dem Mauerschutzrohr in Position gebracht. Der Preßringverschluß liegt dann mit seiner Außenseite an dem Mauerschutzrohr, mit seiner Innenseite an dem Installationsrohr an. Ist der Preßringverschluß in Position gebracht, werden die Sechskantmuttern gleichmäßig angezogen. Aufgrund der Tatsache, daß der vierkantförmige Schaft 33 der Schraubenbolzen 3 in die vierkantförmigen Bohrungen 21 der Flansche 2 versenkt ist, ist ein Verdrehen der Schraubenbolzen beim Anziehen der Sechskantmuttern 34 verhindert. Unter dem durch die Schrauben auf die Flansche 2 ausgeübten Druck wird der Ring 1 zusammengedrückt, wodurch die Wulste 14 sowohl an der Außenseite als auch an der Innenseite des Rings 1 hervortreten. Die hervortretenden Wulste 14 schmiegen sich gleichmäßig an das Installationsrohr bzw. das Mauerschutzrohr an.

Für den Fall, daß das Installationsrohr an seinen beiden Enden Erweiterungen aufweist, die größer sind als der Innendurchmesser des Rings 1 und der Flansche 2, ist der Preßringverschluß geteilt ausgeführt. Hierzu ist der Ring 1 an einer Stelle mit einem über den gesamten Querschnitt verlaufenden Spalt versehen. Weiterhin ist jeder Flansch 2 in zwei Teile getrennt. Dabei ist einer der Schraubenbolzen 3 auf der dem Spalt abgewandten Seite der Trennebene der beiden Flansche 2 benachbart angeordnet. Der Schraubenbolzen 3 wirkt dann nach Art eines Gelenks, wodurch ein Aufklappen des Preßringverschlusses ermöglicht ist. Das Aufklappen des Preßringverschlusses erfolgt um ein Maß, welches geringfügig größer ist als der Außendurchmesser des Installationsrohres. Nach Übergreifen des Installationsrohres werden dann der Ring 1 und die Flansche 2 wieder zusammengeklappt. Die Dichtwirkung erfolgt wie bei der nicht geteilten Ausführungsform des Preßringverschlusses.

## Patentansprüche

1. Preßringverschluß für eine Mauerdurchführung mit einem Ring (1) aus gummielastischem Material, an dem an seiner Außenseite Wülste (13) vorgesehen sind und bei dem an jeder Stirnfläche ein Bohrungen aufweisender Flansch anliegt, wobei beide Flansche mittels axial verlaufender, symmetrisch versetzt angeordneter und durch die Bohrungen gesteckter Schraubenbolzen (3) gegeneinander gedrückt sind, dadurch gekennzeichnet, daß am Ring (1) auch an seiner Innenseite Wülste (13) vorgesehen, außerdem an seiner Innenseite an beiden Enden Lippen (14) angeformt sind, die in axialer Richtung über die Stirnflächen (11) des Rings (1) hinausragen.

2. Preßringverschluß nach Anspruch 1, dadurch gekennzeichnet, daß die Höhe der Lippen (14) jeweils gleich der Dicke der Flansche (2) ist.

3. Preßringverschluß nach einem der Ansprüche 1 bis 2, dadurch gekennzeichnet, daß der Ring (1) aus Polyurethan besteht.

4. Preßringverschluß nach einem der Ansprüche 1 bis 3, dadurch gekennzeichnet, daß die Flansche (2) aus VA-Stahl bestehen.

5. Preßringverschluß nach einem der Ansprüche 1 bis 4, dadurch gekennzeichnet, daß die Flansche (2) Bohrungen (21) und die Schraubenbolzen (3) einen Schaft (33) in Form eines Vierkants aufweisen.

6. Preßringverschluß nach einem der Ansprüche 1 bis 5, dadurch gekennzeichnet, daß der Ring (1) an einer Stelle mit einem über den gesamten Querschnitt verlaufenden Spalt versehen und jeder der Flansche (2) in zwei Teile getrennt ist.

## Claims

1. A compression ring seal for a wall duct with a ring (1) made of rubber-elastic material, on the outside of which beads (13) are provided and against each end face of which a flange comprising bores rests, both flanges being pressed together by means of axially extending and symmetrically offset screw bolts (3) inserted through the bores, characterised in that beads (13) are also provided on the inside of the ring (1) and lips (14) are additionally moulded onto the inside of the ring (1) at both ends, which lips project in the axial direction beyond the end faces (11) of the ring (1).

2. A compression ring seal according to claim 1, characterised in that the height of the lips (14) is equal to the thickness of the flanges (2) in each case.

3. A compression ring seal according to one of claims 1 to 2, characterised in that the ring (1) is made of polyurethane.

4. A compression ring seal according to one of claims 1 to 3, characterised in that the flanges (2) are made of VA steel.

5. A compression ring seal according to one of claims 1 to 4, characterised in that the flanges (2) comprise bores (21) and the screw bolts (3) comprise a shaft (33) in the form of a square.

6. A compression ring seal according to one of claims 1 to 5, characterised in that the ring (1) is provided at one location with a gap extending over the entire cross section and each of the flanges (2) is divided into two sections.

## Revendications

1. Fermeture à bague de pression pour une traversée murale avec une bague (1) composée d'un matériau en caoutchouc, sur laquelle sont prévus des bourrelets (13) sur son côté externe, et sur laquelle s'applique une bride, munie de trous, sur chaque face frontale, les deux brides étant pressées l'une contre l'autre au moyen de boulons filetés (3) s'étendant dans le sens axial, disposés en déport symétrique et emmanchés au travers des trous, caractérisée en ce que des bourrelets (13) sont également prévus sur le côté interne de la bague (1), des lèvres (14), qui dépassent dans le sens axial des faces frontales (11) de la bague (1), étant par ailleurs prévues sur son côté interne, sur les deux extrémités.

2. Fermeture à bague de pression suivant la revendication 1, caractérisée en ce que la hauteur des lèvres (14) est respectivement égale à l'épaisseur des brides (2).

3. Fermeture à bague de pression suivant l'une des revendications 1 à 2, caractérisée en ce que la bague (1) se compose de polyuréthanne.

4. Fermeture à bague de pression suivant l'une des revendications 1 à 3, caractérisée en ce que les brides (2) se composent d'acier VA.

5. Fermeture à bague de pression suivant l'une des revendications 1 à 4, caractérisée en ce que les brides (2) présentent des trous (21) et les boulons filetés (3) une tige (33) en forme d'un quatre-pans.

6. Fermeture à bague de pression suivant l'une des revendications 1 à 5, caractérisée en ce que la bague (1) est munie en un endroit d'une fente s'étendant sur toute la section transversale, et chacune des brides (2) est partagée en deux parties.
